# EUROPÄISCHE PATENTSCHRIFT

(11) **EP 2 858 847 B1**
(45) Veröffentlichungstag und Bekanntmachung des Hinweises auf die Patenterteilung: **09.10.2019**
(21) Anmeldenummer: 13721282.5
(22) Anmeldetag: 15.04.2013
(51) Int. Cl.: B60K 26/02, B60W 50/16, B60W 50/08, G05D 13/02, G05D 13/62

(54) **VERFAHREN UND STEUERGERÄT ZUM STEUERN EINES HAPTISCHEN FAHRPEDALS EINES KRAFTFAHRZEUGS MIT EINER AKTIVIERUNGSBEDINGUNG, SOWIE COMPUTERPROGRAMMPRODUKT ZUR DURCHFÜHRUNG DES VERFAHRENS UND COMPUTERLESBARES MEDIUM DAFÜR**
METHOD AND CONTROL UNIT FOR CONTROLLING A HAPTIC ACCELERATOR PEDAL OF A VEHICLE HAVING AN ACTIVATION CONDITION, AS WELL AS COMPUTER PROGRAM PRODUCT FOR EXECUTING THE METHOD AND COMPUTER READABLE MEDIUM THEREFORE
PROCÉDÉ ET UNITÉ DE COMMANDE POUR COMMANDER UN PÉDALE ACCÉLÉRATEUR D'UN VÉHICULE AYANT UNE CONDITION D'ACTIVATION, AINSI QUE UN PRODUIT DE PROGRAMME POUR ORDINATEUR ET UN MÉDIUM LISIBLE PAR ORDINATEUR POUR UN TEL PRODUIT

(30) Priorität: 08.06.2012 DE 102012209647
(43) Veröffentlichungstag der Anmeldung: 15.04.2015
(73) Patentinhaber: Robert Bosch GmbH, 70442 Stuttgart (DE)
(72) Erfinder: SIEBER, Udo, 74321 Bietigheim (DE); DEISSLER, Markus, 74172 Neckarsulm (DE); HENNING, Daniel, 74372 Sersheim (DE)
(86) Internationale Anmeldenummer: PCT/EP2013/057845
(87) Internationale Veröffentlichungsnummer: WO 2013/182339

(56) Entgegenhaltungen:
- EP-A1- 2 546 496
- DE-A1- 10 250 456
- DE-A1-102004 029 371
- DE-A1-102009 045 512

## Beschreibung

### Gebiet der Erfindung

Die vorliegende Erfindung betrifft ein Verfahren sowie ein Steuergerät zum Steuern eines haptischen Fahrpedals in einem Kraftfahrzeug. Die Erfindung betrifft ferner ein Computerprogrammprodukt, das beim Ausführen auf einem programmierbaren Steuergerät das erfindungsgemäße Verfahren ausführen soll, sowie ein computerlesbares Medium, auf dem ein solches Computerprogrammprodukt gespeichert ist.

### Stand der Technik

In modernen Kraftfahrzeugen wird der Fahrer durch eine Vielzahl von zur Verfügung gestellten Informationen beim Führen des Fahrzeugs unterstützt. Beispielsweise kann es hilfreich sein, dem Fahrer Rückmeldungen über bestimmte Fahrzustände oder Aufforderungen an den Fahrer, bestimmte Maßnahmen zu treffen, zu signalisieren, um die Sicherheit beim Fahren oder den Komfort des Fahrers erhöhen zu können oder um Treibstoff einsparen zu können. Diese Rückmeldungen können auf verschiedene Weise wie zum Beispiel optisch oder akustisch bereitgestellt werden.

In modernen Kraftfahrzeugen werden zusätzlich oft auch Möglichkeiten einer haptischen Rückmeldung an den Fahrer über das Fahrpedal des Fahrzeugs implementiert. Das Fahrpedal ist hierzu mit einem Aktuator ausgestattet, der es ermöglicht, einen von dem Fahrer zu betätigenden Pedalhebel des Fahrpedals gezielt mit einer Kraft zu beaufschlagen.

Beispielsweise kann der Aktuator ab einer bestimmten Pedalhebellage einem weiteren Niederdrücken des Pedalhebels gezielt entgegenwirken, um einem Fahrer so beispielsweise zu signalisieren, dass ein stärkeres Niederdrücken des Pedalhebels zu einer überproportionalen Erhöhung des Kraftstoffverbrauchs führen würde.

Alternativ kann mit Hilfe des Aktuators eine zeitlich variierende Kraft auf den Pedalhebel ausgeübt werden, um diesen in Schwingungen zu versetzen, beispielsweise in Form von Vibrationen oder Pulsationen.

Auf diese Weise können dem Fahrer durch dessen haptische Wahrnehmung Hinweise und Warnungen mitgeteilt oder auch Komfortfunktionen bereitgestellt werden, ohne dass dieser durch optische oder akustische Signale beispielsweise vom Beobachten des Verkehrs abgelenkt würde.

DE 25 55 429 beschreibt ein System zur Erzeugung von taktilen bzw. haptisch wahrnehmbaren Signalen in einem Fahrzeug.

Aus der DE 10 2009 045 512 A1 ist ein Steuergerät und ein Verfahren zum Auswählen einer Widerstandskennlinie eines Fahrpedals bekannt.

### Offenbarung der Erfindung

Erfindungsgemäß wird ein Verfahren gemäß Anspruch 1, ein Steuergerät gemäß Anspruch 9, ein Computerprogrammprodukt gemäß Anspruch 10 und ein computerlesbares Medium gemäß Anspruch 11 vorgeschlagen. Weitere Ausgestaltungen der Erfindung sind in den abhängigen Ansprüchen angegeben.

Die vorliegende Erfindung ermöglicht in ihren Ausführungsformen ein vorteilhaftes Ansteuern eines haptischen Fahrpedals in einem Kraftfahrzeug. Insbesondere kann die Erfindung ein Aktivieren des Aktuators des Fahrpedals derart Steuern, das z.B. Einflüsse des Aktuators auf das Fahrpedal, die von einem Fahrer als störend wahrgenommen werden können, vermieden oder gering gehalten werden können oder überflüssige Aktivierungen des Aktuators vermieden werden können.

Bei dem hierin vorgeschlagenen Verfahren zum Steuern eines haptischen Fahrpedals wird davon ausgegangen, dass ein Pedalhebel des Fahrpedals innerhalb eines Verlagerungsbereichs entlang einer Betätigungsrichtung zwischen einer Ruheposition und einer maximal betätigten Position verlagerbar ist. Der Pedalhebel soll mittels eines Aktuators durch Ausüben einer Gegenkraft entgegen der Betätigungsrichtung ein haptisch wahrnehmbares Signal erzeugen können, wenn der Aktuator bei Auftreten einer Aktivierungsbedingung aktiviert wird. In einem nicht-aktivierten Zustand kann der

Aktuator dabei gegebenenfalls nicht in mechanischem Kontakt mit dem Pedalhebel sein, wobei der Aktuator bei seiner Aktivierung in mechanischem Kontakt mit dem

Pedalhebel gebracht werden kann. Das vorgeschlagene Verfahren soll dabei die folgenden Schritte umfassen: Eine aktuelle Pedaländerungsgeschwindigkeit, das heißt, eine Geschwindigkeit, mit der der Pedalhebel seine Position verändert, soll ermittelt werden, anschließend soll die ermittelte aktuelle Pedaländerungsgeschwindigkeit mit einem vorgegebenen Pedaländerungsgeschwindigkeit-Grenzwert verglichen werden, um abschließend ein Aktivieren des Aktuators ausschließlich dann durchzuführen, wenn die ermittelte aktuelle Pedaländerungsgeschwindigkeit kleiner ist als der Pedaländerungsgeschwindigkeit-Grenzwert.

Dem erfindungsgemäßen Verfahren zugrunde liegende Motivationen bzw. Ideen können unter anderem darin gesehen werden, dass ein Aktuator eines haptischen Fahrpedals möglichst derart angesteuert werden sollte, dass einerseits ein haptisch wahrnehmbares Signal nur dann hilfreich für den Fahrer sein kann und nur dann erzeugt werden sollte, wenn das haptische Signal im Rahmen der technischen Möglichkeiten ausreichend rechtzeitig generiert werden kann, dass der Fahrer auf das haptische Signal entsprechend reagieren kann. Andererseits sollte ein haptisch wahrnehmbares Signal auch nur in Situationen erzeugt werden, in denen davon ausgegangen werden kann, dass der Fahrer eine entsprechende Informationsbereitstellung wünscht.

Es wurde erkannt, dass für das Vorliegen einer der beiden genannten Bedingungen eine aktuell ermittelte Pedaländerungsgeschwindigkeit einen geeigneten zu überwachenden Parameter darstellt.

Beispielsweise kann eine häufig mit Hilfe eines haptischen Fahrpedals implementierte Funktionalität darin liegen, die Aktivierungsbedingung, bei deren Auftreten das haptische Fahrpedal über dessen Aktuator zur Erzeugung eines haptischen wahrnehmbaren Signals aktiviert wird, derart zu wählen, dass von dem Aktuator an dem Pedalhebel ein haptisch wahrnehmbares Signal erzeugt wird, wenn ein weiteres Niederdrücken des Pedalhebels eine erheblich überproportionale Zunahme eines Kraftstoffverbrauchs bewirken würde. Auf diese Weise kann dem Fahrer beim Durchdrücken des Pedalhebels zum Beispiel eine Grenze für verbrauchsgünstigen Betrieb signalisiert werden. Dies kann im Allgemeinen in Form eines variablen Druckpunktes für das Fahrpedal dargestellt werden. Hierzu leitet der in dem Fahrpedal integrierte Aktuator meist kurz vor der angenommenen Grenzposition eine zusätzliche Gegenkraft auf den Pedalhebel. Diese Gegenkraft erhöht sich dann bis zum Erreichen der Grenzposition. Bei Überdrücken der Grenzposition nimmt diese Gegenkraft meist über einen geeignet kurzen Pedalweg wieder ab.

Haptisch wahrnehmbare Signale können dem Fahrer auch zur Angabe von Warnungen oder Hinweisen übermittelt werden. Alternativ zur Generierung eines variablen Druckpunktes kann dem Fahrer das haptisch wahrnehmbare Signal auch in Form von Vibrationen oder Pulsationen übermittelt werden.

Um dabei unabhängig von der Durchdrückgeschwindigkeit, mit der der Fahrer das Fahrpedal durchdrückt, den Druckpunkt bzw. die Vibrationen oder Pulsationen tatsächlich an der gewünschten Grenzposition zu generieren, sollte der Aktuator in der Lage sein, innerhalb einer sehr kurzen Zeit von beispielsweise wenigen Millisekunden seine Kraft auf das Pedal einzuleiten.

Es kann jedoch haptische Fahrpedale geben, bei denen ein Aktuator aufgrund seiner technischen Eigenschaften oder aufgrund der Art und Weise, wie er angesteuert wird, eine gewisse Stellzeit benötigt, um sich an den Pedalhebel anzukoppeln und dann eine Gegenkraft auf den Pedalhebel ausüben zu können. Beispielsweise ist es bei vielen haptischen Fahrpedalen vorgesehen, den Aktuator während Zeiträumen, in denen kein haptisch wahrnehmbares Signal erzeugt werden soll, in eine Park- oder Zwischenposition zu verfahren, in der der Aktuator nicht in mechanischem Kontakt mit dem Pedalhebel steht und vorzugsweise sogar vollständig außerhalb des Verlagerungsbereichs des Pedalhebels angeordnet ist, um eine ungewollte und für den Fahrer störende Beeinflussung des Verhaltens des Pedalhebels zu verhindern. In einem solchen Fall kann eine Stellzeit von beispielsweise 50 bis 100 ms benötigt werden, um den Aktuator in Kontakt mit dem Pedalhebel zu bringen.

Wenn ein Fahrer jedoch den Pedalhebel sehr schnell in Richtung seiner maximal betätigten Position durchdrückt, kann es Situationen geben, in denen der Aktuator selbst bei maximal möglicher Verfahrgeschwindigkeit zu spät in Kontakt mit dem Pedalhebel käme, als dass dem Fahrer an einer geeigneten Pedalposition rechtzeitig ein haptisch wahrnehmbares Signal generiert werden könnte. Wenn ein derart schnelles Niederdrücken des Pedalhebels erkannt wird, kann somit davon ausgegangen werden, dass eine rechtzeitige Erzeugung eines haptisch wahrnehmbaren Signals nicht möglich ist, woraufhin auf die Erzeugung des haptisch wahrnehmbaren Signals vorzugsweise verzichtet wird.

Andererseits kann es Situationen geben, bei denen ein Fahrer den Pedalhebel schnell und mit maximaler Anstrengung nach unten durchdrückt, um für das Fahrzeug eine maximale Beschleunigung zu bewirken, beispielsweise beim Überholen an einer unübersichtlichen Stelle oder bei bereits sichtbarem Gegenverkehr. In einer solchen Situation sind haptisch wahrnehmbare Signale, die einen verbrauchsgünstigen Betrieb des Fahrzeugs signalisieren, weder sinnvoll noch vom Fahrer gewünscht.

In beiden beschriebenen Situationen, das heißt bei einer begrenzten Aktuatordynamik bis zum Ankoppeln des Aktuators an den Pedalhebel einerseits oder bei dem unbedingten Beschleunigungswunsch des Fahrers andererseits, stellt eine zu überwachende Pedaländerungsgeschwindigkeit einen geeigneten Parameter dar, anhand dessen entschieden werden kann, ob in der vorliegenden Situation die Erzeugung eines haptisch wahrnehmbaren Signals einerseits technisch möglich und rechtzeitig erzeugbar ist und andererseits sinnvoll und vom Fahrer gewünscht ist.

Es kann auch vorgesehen sein, den Aktuator für einen Fall, bei dem der Aktuator bereits zuvor aktiviert wurde, in eine Parkposition außerhalb des Verfahrweges des Pedalhebels zu fahren, wenn erkannt wird, dass die aktuelle Pedaländerungsgeschwindigkeit größer wird als der Pedaländerungsgeschwindigkeit-Grenzwert.

Eine aktuelle Position des Pedalhebels kann dabei beispielsweise mit Hilfe eines Pedalhebellagesensors ermittelt werden. Aus einer Änderungsrate eines von dem Pedalhebellagesensor ausgegebenen Signals, welches beispielsweise den Winkel α angibt, unter dem der Pedalhebel aktuell orientiert ist, kann dann die aktuelle Pedaländerungsgeschwindigkeit dα/dt ermittelt werden. Der Pedalhebellagesensor kann dabei in unterschiedlicher Weise technisch realisiert sein, beispielsweise als mit dem Pedalhebel gekoppelter Potentiometer.

Der Pedaländerungsgeschwindigkeit-Grenzwert kann in einer einfachsten Ausgestaltung ein fest voreingestellter Wert sein. In diesem Fall wird immer dann, wenn festgestellt wird, dass sich eine Position des Pedalhebels schneller ändert als dies von dem Pedaländerungsgeschwindigkeit-Grenzwert angegeben ist, eine Aktivierung des Aktuators trotz des Vorliegens einer Aktivierungsbedingung unterdrückt. Die aktuelle Konfiguration, in der sich die Komponenten des haptischen Fahrpedals befinden, bleibt in diesem Fall unberücksichtigt.

Erfindungsgemäß wird der Pedaländerungsgeschwindigkeits-Grenzwert abhängig von der aktuellen Position des Pedalhebels gewählt, oder alternativ oder ergänzend abhängig von der aktuellen Position des Aktuators gewählt. Damit kann beispielsweise berücksichtigt werden, dass der Verfahrweg, den der Aktuator zurücklegen muss, bevor er in mechanischen Kontakt mit dem Pedalhebel gelangt, abhängig sein kann von der aktuellen Position des Pedalhebels und/oder der aktuellen Position des Aktuators.

Insbesondere kann der Pedaländerungsgeschwindigkeit-Grenzwert umso kleiner gewählt werden, je näher die aktuelle Pedalposition an der maximal betätigten Position des Pedalhebels liegt. Hierdurch kann berücksichtigt werden, dass bei bereits teilweise niedergedrücktem Pedalhebel einerseits die Wahrscheinlichkeit steigt, dass der Aktuator nicht mehr rechtzeitig in mechanischen Kontakt mit dem Pedalhebel gebracht werden kann, bevor der Pedalhebel die Pedalposition erreicht, an der eigentlich das haptisch wahrnehmbare Signal erzeugt werden soll, und dass andererseits die Wahrscheinlichkeit steigt, dass bei einem weiteren relativ schnellen Durchdrücken des Pedalhebels ausgehend von der bereits teilweise durchgedrückten Position des Pedalhebels von einem starken Beschleunigungswunsch des Fahrers ausgegangen werden kann, sodass von einer Erzeugung eines haptisch wahrnehmbaren Signals abgesehen werden kann.

Der Pedaländerungsgeschwindigkeit-Grenzwert kann beispielsweise in einem elektrisch auslesbaren Speicher abgespeichert sein, sodass er von einem das haptische Fahrpedal steuernden Steuergerät ausgelesen werden kann. Wie oben beschrieben kann der Pedaländerungsgeschwindigkeit-Grenzwert beispielsweise als einzelner fest voreingestellter Wert abgespeichert sein oder als eine Liste oder Tabelle von Grenzwerten in Abhängigkeit von einer aktuellen Position des Pedalhebels und/oder des Aktuators. Auch eine dynamische Änderung des Pedaländerungsgeschwindigkeit-Grenzwertes aufgrund beispielsweise eines Lernprozesses durch das Steuergerät ist denkbar. Typische Werte für den Pedaländerungsgeschwindigkeit-Grenzwert liegen im Bereich einer Winkeländerungsrate des Pedalhebels von mehr als 100°/s, vorzugsweise mehr als 200°/s.

Die oben beschriebenen Ausführungsformen von erfindungsgemäßen Verfahren und die damit erreichbaren Funktionalitäten und Vorteile können durch ein in einem Fahrzeug vorgesehenes Steuergerät zum Steuern des Fahrpedals implementiert werden.

Das Steuergerät kann dabei dazu ausgelegt sein, über geeignete Schnittstellen beispielsweise Signale von einem Pedalhebellagesensor empfangen zu können und Steuersignale an den Aktuator des Fahrpedals zu senden zu können. Der allgemein verwendete Begriff "Steuergerät" soll dabei nicht ausschließen, dass nicht nur ein Steuern, sondern auch ein aktives Regeln des Aktuators durchgeführt werden kann.

Das Steuergerät kann das vorgeschlagene Steuerverfahren sowie etwaige Informationsauswertungen von Sensorsignalen in Hardware und/oder in Software implementieren. Es kann vorteilhaft sein, ein programmierbares Steuergerät für die Ausführung des oben beschriebenen Verfahrens zu programmieren. Hierzu kann ein Computerprogrammprodukt computerlesbare Anweisungen aufweisen, die das programmierbare Steuergerät dazu anweisen, die Schritte des jeweiligen Verfahrens durchzuführen. Das Computerprogrammprodukt kann auf einem computerlesbaren Medium wie beispielsweise einer CD, einer DVD, einem Flashspeicher, einem ROM, einem EPROM oder ähnlichem gespeichert sein. Um die von dem Aktuator einzunehmende Anordnung korrekt ansteuern zu können, kann neben der Verarbeitung weiterer Sensordaten auch in einer Datenbank oder in Form von Kennlinien gespeicherte Information über ein von dem Aktuator durchgeführtes Reaktionsverhalten auf bestimmte Steuerungssignale oder ein Streckenverhalten des Aktuators herangezogen werden.

Es wird angemerkt, dass mögliche Merkmale und Vorteile von Ausführungsformen der Erfindung hierin teilweise mit Bezug auf ein erfindungsgemäßes Verfahren und teilweise mit Bezug auf ein erfindungsgemäßes Steuergerät beschrieben sind. Ein Fachmann wird erkennen, dass die einzelnen Merkmale in geeigneter Weise miteinander kombiniert oder ausgetauscht werden können, insbesondere von dem Steuergerät auf das Verfahren und umgekehrt übertragen werden können, um auf diese Weise zu weiteren Ausführungsformen und möglicherweise Synergieeffekten gelangen zu können.

### Kurze Beschreibung der Zeichnungen

Nachfolgend werden Ausführungsformen der Erfindung mit Bezug auf die beigefügten Zeichnungen beschrieben. Weder die Beschreibung noch die Zeichnungen sollen dabei als die Erfindung einschränkend ausgelegt werden.
- Figur 1: zeigt ein Kraftfahrzeug mit einem Steuergerät zum Ausführen eines Verfahrens gemäß einer Ausführungsform der vorliegenden Erfindung;
- Figur 2: zeigt ein haptisches Fahrpedal mit einem Steuergerät gemäß einer Ausführungsform der vorliegenden Erfindung;

Die Figuren sind lediglich schematisch und nicht maßstabsgetreu.

### Ausführungsformen der Erfindung

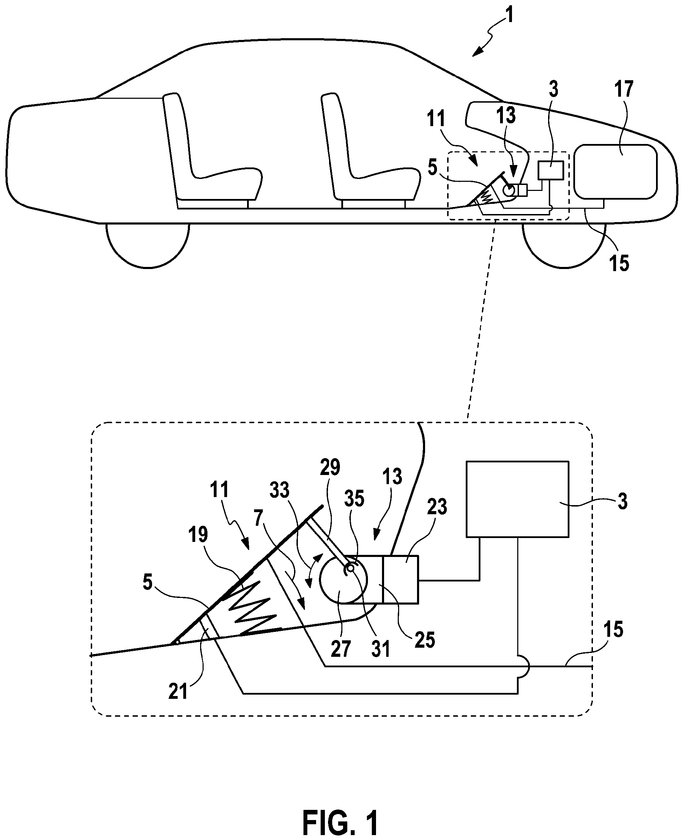

Figur 1 zeigt eine Schnittansicht eines Fahrzeugs 1 mit einem haptischen Fahrpedal 11. Durch Niederdrücken des Pedalhebels 5 kann ein Fahrer einen Motor 17 des Fahrzeugs 1 über einen Seilzug 15 oder eine mit einem Motorsteuergerät verbundene Leitung (nicht dargestellt) zum Beschleunigen des Fahrzeugs veranlassen. Der Fahrer muss hierzu den Pedalhebel 5 in einer Betätigungsrichtung des Pfeils 7 niederdrücken, wodurch sich der Pedalhebel 5, ausgehend von einer Ruheposition entlang eines Verlagerungsbereichs hin zu einer maximal betätigten Position, verlagern lässt. Ein Pedalhebellagesensor 21 kann dabei die aktuelle Position bzw. Lage des Pedalhebels 5 bestimmen. Eine Feder 19 spannt den Pedalhebel 5 entgegen der Betätigungsrichtung 7 hin zu der Ruheposition vor.

Das Fahrpedal 11 ist als haptisches Fahrpedal ausgestaltet. Hierzu verfügt das Fahrpedal 11 über einen Aktuator 13, mit Hilfe dessen der Pedalhebel 5 in eine gewünschte Richtung entgegen der Betätigungsrichtung 7 bewegt bzw. in diese mit Kraft beaufschlagt werden kann. Der Aktuator 13 kann hierbei den Pedalhebel 5 zu Schwingungen anregen, beispielsweise in Form von Vibrationen oder Pulsationen. Alternativ kann der Aktuator 13 eine Kraft auf den Pedalhebel 5 ausüben, die ein weiteres Niederdrücken des Pedalhebels 5 erschweren kann und somit von einem Fahrer als Druckpunkt beim Betätigen des Pedalhebels 5 wahrgenommen werden kann.

Der Aktuator 13 kann mit einem Motor 23 betrieben werden, der über ein Getriebe 25 mit einer Betätigungsscheibe 27 gekoppelt ist. Durch Betätigen des Motors 23 kann die Betätigungsscheibe 27, wie durch den Pfeil 33 angedeutet, im oder gegen den Uhrzeigersinn verdreht werden. An der Betätigungsscheibe 27 ist in einem außerzentrischen Bereich ein Nocken 31 vorgesehen. Dieser Nocken 31 kann mit einem an dem Pedalhebel 5 vorgesehenen Stößel 29 zusammenwirken. Hierzu weist der Stößel 29 an seinem zu dem Aktuator 13 gerichteten Ende eine gabelförmige Aufnahme 35 auf, in die der Nocken 31 eingreifen kann, sobald die Betätigungsscheibe 27 in eine entsprechende Position gedreht wurde.

Alternativ kann der Aktuator auch als Direktantrieb beispielsweise mit einem Torquer-Motor ausgestaltet sein, wodurch hohe Kräfte auch ohne ein Getriebe erzeugt werden können.

Der Aktuator 13 wird von einem Steuergerät 3 angesteuert. Das Steuergerät 3 erkennt, wenn einem Fahrer über den Pedalhebel 5 ein haptisch wahrnehmbares Signal übermittelt werden soll, um ihn beispielsweise auf die Möglichkeit einer kraftstoffsparenden Fahrweise oder eine Gefahrensituation hinzuweisen. Das Steuergerät aktiviert daraufhin den Aktuator und steuert diesen derart an, dass eine konstante oder zeitlich variierende Kraft entgegen der Betätigungsrichtung 7 auf den Pedalhebel 5 ausgeübt wird.

Solange der Pedalhebel 5 nicht mit einem haptisch wahrnehmbaren Signal beaufschlagt werden soll, d.h. im nicht-aktivierten Zustand, soll der Aktuator 13 in einer Position bleiben, in der er eine Bewegung des Pedalhebels 5 nicht beeinflusst, um ungewollte Störeinflüsse auf das Verhalten des Pedalhebels 5 zu vermeiden. Hierzu kann der Aktuator beispielsweise in eine Position verfahren werden, sodass der Nocken 31 außerhalb des Verlagerungsbereichs der mit dem Pedalhebel 5 gekoppelten Gabel 35 liegt.

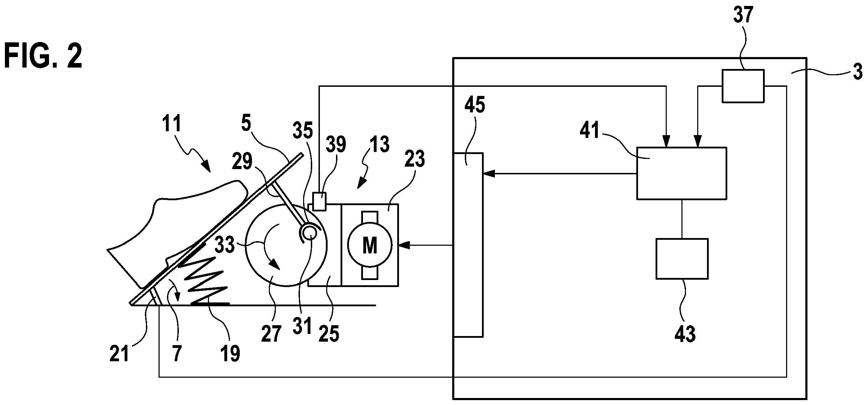

Fig. 2 veranschaulicht eine Ausführungsform eines Fahrpedals 11 und des zu dessen Ansteuerung verwendeten Steuergeräts 3, um das Fahrpedal 11 im Einklang mit dem erfindungsgemäßen Verfahren anzusteuern. Der Pedalhebellagesensor 21 überwacht kontinuierlich eine aktuelle Position des Pedalhebels 5. Wie bei herkömmlichen haptischen Fahrpedalen können Signale des Pedalhebellagesensors 21 dazu verwendet werden, den Aktuator 13 anzusteuern, um ihn beispielsweise während Zeiträumen, in denen kein haptisch wahrnehmbares Signal erzeugt werden soll, in eine Ruheposition zu verfahren bzw. in Zeiträumen, in denen ein haptisch wahrnehmbares Signal erzeugt werden soll, derart zu verfahren, dass der Nocken 31 in mechanische Anlage mit der Gabel 35 kommt. Hierfür vorgesehene Steuerungskomponenten sind in Fig. 2 aus Übersichtlichkeitsgründen nicht dargestellt.

Ergänzend wird nun das von dem Pedalhebellagesensor 21 ausgegebene Signal an eine Auswerteeinheit 37 in dem Steuergerät 3 übermittelt, die den zeitlichen Verlauf dieses Signals beobachtet und hieraus ein Signal generiert, das eine Pedaländerungsgeschwindigkeit angibt, das heißt, das angibt, wie schnell sich die Position des Pedalhebels 5 beispielsweise in Reaktion auf eine von dem Fahrer darauf ausgeübten Kraft verändert. Das entsprechende Signal wird an eine Vergleichseinheit 41 weitergeleitet. In dieser Vergleichseinheit 41 wird dieses Pedaländerungsgeschwindigkeit-Signal mit einem in einem Speicher 43 gespeicherten Pedaländerungsgeschwindigkeit-Grenzwert verglichen. Lediglich, wenn das tatsächliche Pedaländerungsgeschwindigkeit-Signal kleiner ist als der vorgegebene Pedaländerungsgeschwindigkeit-Grenzwert wird ein Signal an eine Endstufe 45 übermittelt. Sofern beispielsweise von einer weiteren Steuerungsschaltung (in Fig. 2 nicht dargestellt) ein Signal an die Endstufe 45 gegeben wird, welches angibt, dass eine Aktivierungsbedingung vorliegt, steuert dann die Endstufe 45 den Aktuator 13 derart an, dass sich der Nocken 31 in mechanischen Kontakt mit der Gabel 35 des an dem Pedalhebel 5 vorgesehenen Stößels 29 bewegt und ein haptisch wahrnehmbares Signal erzeugt wird.

Als Beispiel kann angenommen werden, dass ein Fahrer den Pedalhebel 5 innerhalb von ca. 80 ms komplett durchtreten kann. Das bedeutet bei einem angenommenen Verlagerungsbereich des Pedalhebels von ca. 17° eine Pedaländerungsgeschwindigkeit von ca. 200°/s. Dieser Wert oder dieser Wert mit einem gewissen Zuschlag kann nun als Grenzwert definiert werden, sodass das entsprechend angesteuerte System bei einer Pedaländerungsgeschwindigkeit von mehr als 200°/s entscheidet, dass ein haptisch wahrnehmbares Signal trotz erfüllter Aktivierungsbedingung, das heißt zum Beispiel trotz starken Treibstoffverbrauchanstiegs bei weiterem Durchdrücken des Pedalhebels, nicht sinnvoll ist und damit nicht erzeugt werden soll.

Ergänzend kann auch das Signal von einem Aktuatorlagesensor 39 in der Vergleichseinheit 41 verwendet werden, um bei der Entscheidung, ob ein haptisch wahrnehmbares Signal erzeugt werden soll oder nicht, mitberücksichtigt werden zu können. In dem System kann dabei eine maximal mögliche Aktuatordynamik für verschiedene Stell-Anfangsbedingungen des Aktuators hinterlegt sein, wobei dann basierend auf der aktuellen Pedaländerungsgeschwindigkeit berechnet und/oder entschieden werden kann, ob der Aktuator 13 den Pedalhebel 5 an der vorgegebenen Position erreichen kann und es möglich ist, ein haptisch wahrnehmbares Signal rechtzeitig zu erzeugen.

## Patentansprüche

1. Verfahren zum Steuern eines haptischen Fahrpedals (11) in einem Kraftfahrzeug (1), wobei ein Pedalhebel (5) des Fahrpedals (11) innerhalb eines Verlagerungsbereichs entlang einer Betätigungsrichtung (7) zwischen einer Ruheposition und einer maximal betätigten Position verlagerbar ist, und wobei der Pedalhebel (5) mittels eines Aktuators (13) durch Ausüben einer Gegenkraft entgegen der Betätigungsrichtung (7) zur Erzeugung eines haptisch wahrnehmbaren Signals angeregt werden kann, wenn der Aktuator (13) bei Auftreten einer Aktivierungsbedingung aktiviert wird, wobei das Verfahren die folgenden Schritte aufweist: Ermitteln einer aktuellen Pedaländerungsgeschwindigkeit, mit der der Pedalhebel (5) seine Position verändert,
Vergleichen der ermittelten aktuellen Pedaländerungsgeschwindigkeit mit einem vorgegebenen Pedaländerungsgeschwindigkeits-Grenzwert, und
Aktivieren des Aktuators (13) ausschließlich, wenn die ermittelte aktuelle Pedaländerungsgeschwindigkeit kleiner ist als der Pedaländerungsgeschwindigkeit-Grenzwert,
**dadurch gekennzeichnet, dass**
der Pedaländerungsgeschwindigkeits-Grenzwert abhängig ist von der aktuellen Position des Pedalhebels (5)
oder dass der Pedaländerungsgeschwindigkeits-Grenzwert abhängig ist von der aktuellen Position des Aktuators (13).

2. Verfahren nach Anspruch 1, wobei eine aktuelle Position des Pedalhebels (5) über einen Pedalhebellagesensor (21) ermittelt wird und die aktuelle Pedaländerungsgeschwindigkeit aus einer Änderungsrate eines von dem Pedalhebellagesensor (21) ausgegebenen Signals ermittelt wird.

3. Verfahren nach einem der Ansprüche 1 oder 2, wobei der Pedaländerungsgeschwindigkeits-Grenzwert umso kleiner ist, je näher die aktuelle Pedalposition an der maximal betätigten Position liegt.

4. Verfahren nach einem der Ansprüche 1 bis 3, wobei der Aktuator (13) sich in einem nicht-aktivierten Zustand nicht in mechanischem Kontakt mit dem Pedalhebel (5) befindet und bei Aktivierung in mechanischen Kontakt mit dem Pedalhebel (5) gebracht werden kann.

5. Verfahren nach einem der Ansprüche 1 bis 4, wobei die Aktivierungsbedingung derart gewählt ist, dass von dem Aktuator an dem Pedalhebel (5) ein haptisches Signal erzeugt wird, wenn ein weiteres Niederdrücken des Pedalhebels (5) eine erheblich überproportionale Zunahme des Kraftstoffverbrauchs bewirken würde, oder wenn dem Fahrer eine Warnung oder ein Hinweis zu übermitteln ist.

6. Verfahren nach einem der Ansprüche 1 bis 4, wobei der Aktuator für einen Fall, bei dem der Aktuator bereits zuvor aktiviert wurde, in eine Parkposition gefahren wird, wenn erkannt wird, dass die aktuelle Pedaländerungsgeschwindigkeit größer wird als der Pedaländerungsgeschwindigkeits-Grenzwert.

7. Verfahren nach einem der Ansprüche 1 bis 6, wobei der Pedaländerungsgeschwindigkeits-Grenzwert in einem elektrisch auslesbaren Speicher (43) abgespeichert ist.

8. Verfahren nach einem der Ansprüche 1 bis 7, wobei der Pedaländerungsgeschwindigkeits-Grenzwert größer als 100°/s ist.

9. Steuergerät (3) zum Steuern eines haptischen Fahrpedals (11) in einem Kraftfahrzeug (1), wobei das Steuergerät (3) eingerichtet ist, ein Verfahren gemäß einem der Ansprüche 1 bis 8 durchzuführen.

10. Computerprogrammprodukt, welches computerlesbare Anweisungen aufweist, die ein programmierbares Steuergerät (3) dazu anweisen, ein Verfahren gemäß einem der Ansprüche 1 bis 8 durchzuführen.

11. Computerlesbares Medium mit einem darauf gespeicherten Computerprogrammprodukt gemäß Anspruch 10.

## Claims

1. Method for controlling a haptic accelerator pedal (11) in a motor vehicle (1), wherein a pedal lever (5) of the accelerator pedal (11) can be moved in an activation direction (7) within a movement range between a position of rest and a position of maximum activation,
and
wherein the pedal lever (5) can be excited by means of an actuator (13) by applying an opposing force counter to the activation direction (7) in order to generate a haptically perceptible signal if the actuator (13) is activated when an activation condition occurs,
wherein the method has the following steps:
determining a current rate of change of the pedal, at which the pedal lever (5) changes its position,
comparing the determined current rate of change of the pedal with a predefined limiting value for the rate of change of the pedal, and
activating the actuator (13) only if the determined current rate of change of the pedal is lower than the limiting value for the rate of change of the pedal,
**characterized in that**
the limiting value for the rate of change of the pedal is dependent on the current position of the pedal lever (5),
or **in that**
the limiting value for the rate of change of the pedal is dependent on the current position of the actuator (13) .

2. Method according to Claim 1, wherein a current position of the pedal lever (5) is determined by means of a pedal lever position sensor (21), and the current rate of change of the pedal is determined from a rate of change of a signal which is output by the pedal lever position sensor (21).

3. Method according to either of Claims 1 and 2, wherein the limiting value for the rate of change of the pedal is lower the closer the current position of the pedal is to the position of maximum activation.

4. Method according to one of Claims 1 to 3, wherein in a non-activated state the actuator (13) is not in mechanical contact with the pedal lever (5), and when activation occurs it can be brought into mechanical contact with the pedal lever (5).

5. Method according to one of Claims 1 to 4, wherein the activation condition is selected such that a haptic signal is generated by the actuator on the pedal lever (5) if a further depression of the pedal lever (5) would bring about a considerably disproportionate increase in the fuel consumption, or if a warning or a message is to be transmitted to the driver.

6. Method according to one of Claims 1 to 4, wherein in the event of the actuator having already been activated, the actuator is moved into a parked position if it is detected that the current rate of change of the pedal is higher than the limiting value for the rate of change of the pedal.

7. Method according to one of Claims 1 to 6, wherein the limiting value for the rate of change of the pedal is stored in an electrically readable memory (43).

8. Method according to one of Claims 1 to 7, wherein the limiting value for the rate of change of the pedal is higher than 100°/s.

9. Control unit (3) for controlling a haptic accelerator pedal (11) in a motor vehicle (1), wherein the control unit (3) is configured to carry out a method according to one of Claims 1 to 8.

10. Computer program product which has computer-readable instructions which instruct a programmable control unit (3) to carry out a method according to one of Claims 1 to 8.

11. Computer-readable medium having a computer program product according to Claim 10 stored thereon.

## Revendications

1. Procédé pour commander une pédale d'accélérateur (11) haptique dans un véhicule automobile (1), un levier de pédale (5) de la pédale d'accélérateur (11) pouvant être déplacé au sein d'une zone de déplacement le long d'une direction d'actionnement (7) entre une position de repos et une position d'actionnement maximal, et le levier de pédale (5) pouvant être excité au moyen d'un actionneur (13) en vue de générer un signal perceptible haptiquement en exerçant une force antagoniste à l'opposé de la direction d'actionnement (7) lorsque l'actionneur (13) est activé lorsque survient une condition d'activation,
le procédé comprenant les étapes suivantes :
détermination d'une vitesse de modification de pédale actuelle à laquelle le levier de pédale (5) modifie sa position,
comparaison de la vitesse de modification de pédale actuelle déterminée avec une valeur limite de vitesse de modification de pédale prédéfinie et
activation de l'actionneur (13) exclusivement lorsque la vitesse de modification de pédale actuelle déterminée est inférieure à la valeur limite de vitesse de modification de pédale,
**caractérisé en ce que**
la valeur limite de vitesse de modification de pédale est dépendante de la position actuelle du levier de pédale (5)
ou **en ce que**
la valeur limite de vitesse de modification de pédale est dépendante de la position actuelle de l'actionneur (13).

2. Procédé selon la revendication 1, une position actuelle du levier de pédale (5) étant déterminée par le biais d'un capteur de position de levier de pédale (21) et la vitesse de modification de pédale actuelle étant déterminée à partir d'une vitesse de modification d'un signal délivré par le capteur de position de levier de pédale (21).

3. Procédé selon l'une des revendications 1 ou 2, la valeur limite de vitesse de modification de pédale étant d'autant plus petite que la position de pédale actuelle se trouve plus proche de la position d'actionnement maximal.

4. Procédé selon l'une des revendications 1 à 3, l'actionneur (13) dans un état non activé ne se trouvant pas en contact mécanique avec le levier de pédale (5) et, lors de l'activation, pouvant être amené en contact mécanique avec le levier de pédale (5).

5. Procédé selon l'une des revendications 1 à 4, la condition d'activation étant choisie de telle sorte qu'un signal haptique est généré par l'actionneur au niveau du levier de pédale (5) lorsqu'une poursuite de l'enfoncement du levier de pédale (5) provoquerait une augmentation démesurée de la consommation de carburant, ou lorsqu'une alerte ou une notification doit être communiquée au conducteur.

6. Procédé selon l'une des revendications 1 à 4, l'actionneur étant, dans le cas où l'actionneur a déjà été activé précédemment, amené dans une position de stationnement lorsqu'il est constaté que la vitesse de modification de pédale actuelle devient supérieure à la valeur limite de vitesse de modification de pédale.

7. Procédé selon l'une des revendications 1 à 6, la valeur limite de vitesse de modification de pédale étant mémorisée dans une mémoire (43) lisible électriquement.

8. Procédé selon l'une des revendications 1 à 7, la valeur limite de vitesse de modification de pédale étant supérieure à 100°/s.

9. Contrôleur (3) destiné à commander une pédale d'accélérateur (11) haptique dans un véhicule automobile (1), le contrôleur (3) étant conçu pour mettre en oeuvre un procédé selon l'une des revendications 1 à 8.

10. Produit de programme informatique, lequel comprend des instructions lisibles par ordinateur qui ordonnent à un contrôleur (3) programmable de mettre en oeuvre un procédé selon l'une des revendications 1 à 8.

11. Support lisible par ordinateur sur lequel est enregistré un produit de programme informatique selon la revendication 10.
